# EUROPÄISCHE PATENTSCHRIFT

(11) **EP 2 923 139 B1**
(45) Veröffentlichungstag und Bekanntmachung des Hinweises auf die Patenterteilung: **28.12.2016**
(21) Anmeldenummer: 13783069.1
(22) Anmeldetag: 25.10.2013
(51) Int. Cl.: F16N 11/00, F16N 11/10

(54) **VERFAHREN ZUR DOSIERTEN ABGABE EINES SCHMIERSTOFFES**
METHOD FOR METERED DISPOSAL OF A LUBRICANT
PROCÉDÉ DE CESSION REGLÉE D'UN LUBRIFIANT

(30) Priorität: 21.11.2012 DE 102012111239
(43) Veröffentlichungstag der Anmeldung: 30.09.2015
(73) Patentinhaber: Perma-Tec GmbH & Co. KG, 97717 Euerdorf (DE)
(72) Erfinder: MORPER, Rainer, 97729 Ramsthal (DE); LEHNERT, Jochen, 97618 Niederlauer (DE)
(74) Vertreter: Lorenz, Bernd Ingo Thaddeus
(86) Internationale Anmeldenummer: PCT/EP2013/072438
(87) Internationale Veröffentlichungsnummer: WO 2014/079655

(56) Entgegenhaltungen:
- WO-A1-2010/099812
- WO-A1-2010/099813
- DE-A1-102007 021 376
- DE-A1-102007 033 539

## Beschreibung

Die Erfindung betrifft ein Verfahren zur dosierten Abgabe eines Schmierstoffes mittels eines Schmierstoffspenders, der eine mit Schmierstoff gefüllte Schmierstoffkartusche, zumindest eine elektrochemische Gaserzeugerzelle und eine Steuerelektronik zur Ansteuerung der Gaserzeugerzelle umfasst. Die Steuer-elektronik weist einen Microcontroller und einen Schalter zur Unterbrechung des durch die Gaserzeugerzelle fließenden Stromes auf. Durch Schließen des Stromkreises durch die Gaserzeugerzelle wird in dieser Gas freigesetzt, welches Schmierstoff aus der Kartusche verdrängt.

Um eine sparsame und gleichzeitig ausreichende Schmierung zu gewährleisten, ist eine präzise Dosierung der Schmierstoffabgabe notwendig. Erfolgt die Spende von Schmierstoff in zu kurzen Abständen bzw. in zu großen Mengen, wird zu viel Schmierstoff verbraucht und muss ein Austausch der Schmierstoffkartusche früher als notwendig erfolgen. Tritt hingegen bei zu kleinen oder zu seltenen Schmiermittelspenden eine Mangelschmierung auf, führt dies mitunter zu Schäden an den zu schmierenden Maschinenteilen.

Um die abgegebene Schmierstoffmenge zu bestimmen, wird im Stand der Technik die in der Gaserzeugungseinheit erzeugte Gasmenge abgeschätzt. Dabei nutzt man, dass die von einer elektrochemischen Gaserzeugungszelle abgegebene Gasmenge bei üblichen Betriebsbedingungen ungefähr proportional zur durch die Gaserzeugungszelle geflossenen Ladungsmenge ist. Da die in einer Gaserzeugerzelle durch das chemische Potenzial hervorgerufene Spannung bzw. die Versorgungsspannung einer gegebenenfalls zusätzlich verwendeten Gleichspannungsquelle und auch die elektrischen Eigenschaften der Gaserzeugungszelle, wie zum Beispiel der Innenwiderstand, bekannt sind, kann die geflossene Ladungsmenge über die Zeit, in der der Stromkreis geschlossen ist, abgeschätzt werden. Basierend auf dieser Berechnung wird die Spendedauer festgelegt und als fester Vorgabewert verwendet.

In der Praxis hat sich jedoch gezeigt, dass die elektrischen Eigenschaften des Stromkreises variabel sind. Sie ändern sich insbesondere über die Lebens- und Leistungsdauer der Gaserzeugerzelle und gegebenenfalls der Spannungsquelle. Sie sind überdies stark temperaturabhängig. Auch wirkt sich die Geometrie unterschiedlicher Kartuschen mit verschiedenen anfänglichen Schmierstoffvolumina auf die tatsächlich abgegebene Schmierstoffmenge aus. Durch diese Effekte wird die zuvor beschriebene Abschätzung einer abgegebenen Schmierstoffdosis zunehmend ungenau und führt die Verwendung von Vorgabewerten für die Spendedauer zu unbefriedigenden Ergebnissen.

Eine gattungsgemässe Vorrichtung ist aus der DE 10 2007 021367 bekannt.

Vor diesem Hintergrund liegt der Erfindung die Aufgabe zugrunde, ein Verfahren zur dosierten Abgabe eines Schmierstoffes anzugeben, welches mit einfachen und kostengünstigen Mitteln eine verbesserte Spendengenauigkeit erreicht.

Lösung dieser Aufgabe und Gegenstand der Erfindung ist ein Verfahren nach Anspruch 1.

Der Schmierstoffspender weist eine mit Schmierstoff befüllte Schmierstoffkartusche, zumindest eine elektrochemische Gaserzeugerzelle und eine Steuerelektronik zur Ansteuerung der Gaserzeugerzelle auf. Die Steuerelektronik umfasst einen Microcontroller und einen Schalter zur Unterbrechung des durch die Gaserzeugerzelle fließenden Stromes. In einstellbaren Zeitintervallen wird von der Steuerelektronik der Stromkreis durch die Gaserzeugerzelle geschlossen. Durch das freigesetzte Gas wird Schmierstoff aus der Kartusche verdrängt. Die Verdrängung erfolgt dabei vorzugsweise durch einen Kolben, welcher mit seiner einen Seite einen den Schmierstoffvorrat enthaltenen Raum begrenzt und auf der anderen Seite durch das in der Gaserzeugerzelle freigesetzte Gas mit Druck beaufschlagt wird. Während der Gaserzeugung wird der durch die Gaserzeugerzelle fließende elektrische Strom gemessen und die durch die Gaserzeugerzelle geflossene Ladung durch den Microcontroller aufsummiert. Die erzeugte Gasmenge ist proportional zu der Ladung, welche durch den Gaserzeugungsstromkreis fließt. Der Stromkreis wird unterbrochen, wenn die summierte Ladung eine vorgegebene kumulierte Ladungsmenge überschritten hat.

Durch die direkte Verwendung des geflossenen elektrischen Stromes kann die produzierte Gasmenge unabhängig von den Übergangswiderständen im Stromkreis durch die Gaserzeugerzelle bestimmt werden. Dies steigert die Spendegenauigkeit erheblich, welche auch über den gesamten Spendezeitraum erhalten bleibt. Dabei wird auch der Einfluss der Selbstentladung der Gaserzeugerzellen weitgehend kompensiert.

In einer bevorzugten Ausgestaltung wird das Verfahren in aufeinanderfolgenden Zeitintervallen mehrfach durchlaufen. Dabei wird beim Abschalten die Ladungsmenge, um welche die kumulierte Ladung den angestrebten Ladungswert überschritten hat, abgespeichert. Beim folgenden Durchlauf wird die Summation der kumulierten Ladung bei diesem Wert begonnen. Hierdurch kann eine systematische Überdosierung ausgeglichen werden, welche darauf beruht dass der Stromkreis nicht exakt bei Erreichen der vorgegebenen Ladungsmenge sondern erst nach Überschreiten der vorgegebenen Ladungsmenge unterbrochen wird. Bei einem durchschnittlichen Kartuscheninhalt von üblicherweise mehreren 100 Spendedosen kann die durchschnittliche Spendegenauigkeit hierdurch erheblich gesteigert werden.

Vorzugsweise erfolgt die Messung des Stromes diskontinuierlich an äquidistanten Zeitpunkten. Zur Berechnung der geflossenen Ladungsmenge wird die Multiplikation des gemessenen Stromwertes mit der Zeitspanne zwischen den Messpunkten herangezogen. Diese Umsetzung lässt sich besonders einfach und kostengünstig mit einem Microcontroller umsetzen. Die Zeitspanne zwischen zwei Messpunkten wird dabei zweckmäßiger so gewählt, dass sich die elektrischen Eigenschaften des Gaserzeugungsstromkreises, insbesondere der Gaserzeugerzelle, auf dieser Zeitskala nicht wesentlich verändern. Ein üblicher Wert hierfür liegt in der Größenordnung von einer Minute. Gleichzeitig sollte das Messintervall nicht zu groß im Verhältnis zur Länge der durchschnittlich zu erwartenden Gaserzeugungsphase eines Spendenintervalls sein. Ist das Messintervall höchstens halb so lang wie die Länge einer durchschnittlichen Gaserzeugungsphase, lassen sich Überproduktionen von Gas in einem Spendenzeitraum durch den zuvor beschriebenen Übertrag der zu viel geflossenen Ladung zuverlässig ausgleichen.

In einer bevorzugten Ausgestaltung wird zu Beginn eines Spendeintervalls die Umgebungstemperatur gemessen und die vorgegebene kumulierte Ladung in Abhängigkeit von dieser Temperatur bestimmt. Hierdurch können Abweichungen durch Temperaturabhängigkeiten des chemischen Ansprechverhaltens der Gaserzeugungszelle sowie der Viskosität des Schmierstoffes ausgeglichen werden.

Zur Vereinfachung des Microcontrollers und dessen Programmierung kann die vorgegebene kumulierte Ladungsmenge aus einer Tabelle bestimmt werden, welche in einem Speicher der Steuereinheit abgelegt ist.

Vorzugsweise ist diese Tabelle mehrdimensional gestaltet und enthält Werte in Abhängigkeit zumindest von der Umgebungstemperatur, dem anfänglichen Schmierstoffvorrat der unbenutzten Kartusche und der vorgesehenen Betriebsdauer zum vollständigen Entleeren des Schmierstoffspenders. Neben den temperaturabhängigen Effekten werden durch diese Tabelle Abweichungen durch das Ansprech- und Wiederansprechverhalten der Gaserzeugungszellen und der Geometrie unterschiedlicher Kartuschentypen erfasst und kompensiert.

In einer bevorzugten Ausgestaltung wird die Betriebsdauer zur vollständigen Entleerung der Kartuschen durch Benutzereingabe festgelegt. Eine weitere im Speicher der Steuereinheit abgelegte Tabelle enthält für jede einstellbare Betriebsdauer den zeitlichen Abstand zwischen zwei aufeinanderfolgenden Spenden (Spendeintervall) und kann daraus abgerufen werden. Die Länge des Spendenintervalls bleibt während des gesamten Betriebs konstant. Die Dosierung erfolgt über die Steuerung der Zeitspanne mit Gaserzeugung (Spendenzeit). Auf diese folgt für den Rest des Spendenintervalls ein Zeitraum ohne Gaserzeugung (Pausenzeit).

Zweckmäßigerweise wird bei der Verwendung von Kartuschen mit unterschiedlichem anfänglichen Schmierstoffvolumina jeweils der gleiche Bruchteil des ursprünglichen Schmierstoffvorrats pro Spende abgegeben, so dass die Länge des Spendeintervalls unabhängig vom Kartuschentyp für eine Betriebsdauer zur vollständigen Entleerung jeweils gleich groß ist. Üblicherweise wird pro Spende jeweils ein Tausendstel bis Einhundertstel des ursprünglichen Schmierstoffvorrats abgegeben.

Die Erfindung soll nachfolgend an lediglich Ausführungsbeispiele darstellenden Zeichnungen erläutert werden. Es zeigen schematisch:
- Fig. 1: einen Längsschnitt durch einen Schmierstoffspender und
- Fig. 2: einen Ausschnitt eines elektrischen Schaltplanes zum Betreiben des in Fig. 1 dargestellten Schmierstoffspenders.

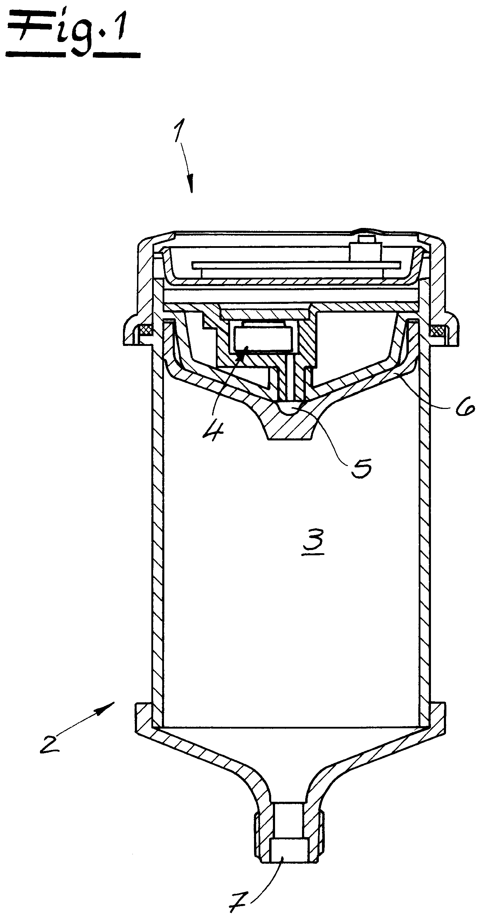

Zum grundsätzlichen Aufbau des in Fig. 1 dargestellten Schmierstoffspenders gehört eine Steuereinheit 1 und eine Schmierstoffkartusche 2. Die Schmierstoffkartusche 2 ist in einem Innenraum mit Schmierstoff 3 gefüllt. Der Schmierstoffspender umfasst ferner zumindest eine elektrochemische Gaserzeugerzelle 4. Die Steuerelektronik 1 regelt den Stromfluss durch die Gaserzeugerzelle 4 und steuert dadurch die darin produzierte Gasmenge. Diese gelangt durch eine Leitung in einen Raum 5 hinter einem Kolben 6, welcher in der Schmierstoffkartusche angeordnet ist und mit seiner dem Raum 5 abgewandten Seite den Raum des Schmierstoffvorrats 3 begrenzt. Durch die Gasproduktion entsteht in dem Raum 5 ein Überdruck, welcher vom Kolben 6 auf den Schmierstoff übertragen wird. Dadurch wird der Schmierstoff 3 aus der Schmierstoffkartusche 2 verdrängt und wird durch eine Öffnung 7 aus der Schmierstoffkartusche 2 abgegeben.

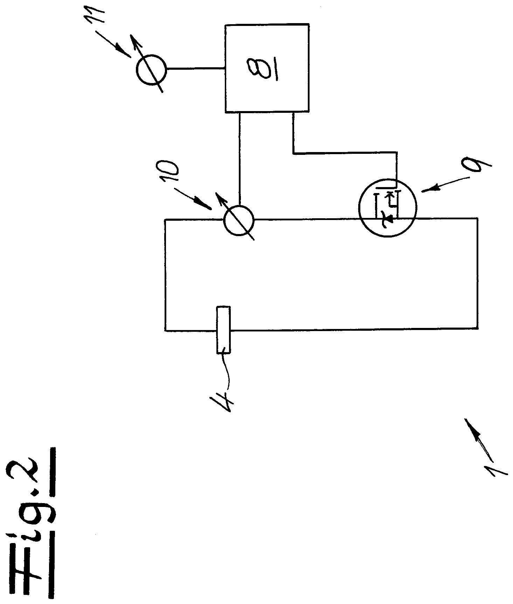

In Fig. 2 ist eine mögliche Ausgestaltung der Verschaltung der Steuerelektronik 1 zur Durchführung des erfindungsgemäßen Verfahrens stark vereinfacht dargestellt. Die Steuerelektronik 1 weist einen Microcontroller 8 und einen Schalter 9 zur Unterbrechung des durch die Gaserzeugerzelle 4 fließenden Stromes auf. Der Schalter 9 wird durch den Microcontroller 8 angesteuert und ist vorzugsweise als Feldeffekttransistor, insbesondere Metalloxidfeldeffekttransistor (MOSFET) ausgeführt. Die Verwendung eines spannungsgesteuerten Feldeffekttransistors ermöglicht eine sparsamere Steuerung des Stromflusses als bei stromgesteuerten Bipolartransistoren. Im vorliegenden Beispiel startet die Gasproduktion selbsttätig nach dem Verbinden der beiden Anschlusskontakte der Gaserzeugerzelle 4 durch den Schalter 9. In alternativen Ausgestaltungen kann der Stromfluss durch die Gaserzeugerzelle 4 auch durch eine zusätzliche Gleichspannungsquelle hervorgerufen oder verstärkt werden. In dem Stromkreis ist ferner eine Einrichtung 10 zur Messung des fließenden elektrischen Stromes vorgesehen, dessen Messwerte von dem Microcontroller 8 erfasst werden. Eine mögliche Ausgestaltung zur Strommessung kann darin bestehen, die über einen bekannten Innenwiderstand des Stromkreises abfallende Spannung zu messen.

In einstellbaren Zeitintervallen schließt der Microcontroller 8 mittels des Schalters 9 den Stromkreis durch die Gaserzeugerzelle 4. Durch das freigesetzte Gas wird Schmierstoff aus der Kartusche verdrängt. Während der Gaserzeugung wird der durch die Gaserzeugerzelle 4 fließende elektrische Strom mit der Messeinrichtung 10 gemessen und die durch die Gaserzeugerzelle 4 geflossene Ladungsmenge durch den Microcontroller 8 aufsummiert. Nach Überschreiten einer vorgegebenen kumulierten Ladungsmenge unterbricht der Microcontroller 8 den Stromkreis mittels des Schalters 9. Die vorgegebene kumulierte Ladungsmenge entnimmt der Microcontroller 8 einer in dem Speicher der Steuerungselektronik abgelegten Tabelle in Abhängigkeit von der mit einer Temperaturmesseinrichtung 11 erfassten Umgebungstemperatur.

## Patentansprüche

1. Verfahren zur dosierten Abgabe eines Schmierstoffes (3) mittels eines Schmierstoffspenders, der eine mit Schmierstoff (3) gefüllte Schmierstoffkartusche (2), zumindest eine elektrochemische Gaserzeugerzelle (4) und eine Steuerelektronik (1) zur Ansteuerung der Gaserzeugerzelle (4) mit einem Microcontroller (8) und einem Schalter (9) zur Unterbrechung des durch die Gaserzeugerzelle (4) fließenden Stromes aufweist,
wobei in einstellbaren Zeitintervallen von der Steuerelektronik (1) der Stromkreis durch die Gaserzeugerzelle (4) geschlossen und durch das freigesetzte Gas Schmierstoff (3) aus der Kartusche (2) verdrängt wird,
wobei während der Gaserzeugung der durch die Gaserzeugerzelle (4) fließende elektrische Strom gemessen wird, **dadurch gekennzeichnet, dass** die durch die Gaserzeugerzelle (4) geflossene Ladung aufsummiert wird und dass der Stromkreis unterbrochen wird, wenn die summierte Ladung eine vorgegebene kumulierte Ladungsmenge überschritten hat.

2. Verfahren nach Anspruch 1, **dadurch gekennzeichnet, dass** das Verfahren in aufeinanderfolgenden Zeitintervallen mehrfach durchlaufen wird und dass beim Abschalten die Ladungsmenge, um welche die kumulierte Ladung den angestrebten Ladungswert überschritten hat, gespeichert wird und beim folgenden Durchlauf die Summation der kumulierten Ladung bei diesem Wert begonnen wird.

3. Verfahren nach Anspruch 1 oder 2, **dadurch gekennzeichnet, dass** die Messung des Stromes diskontinuierlich an äquidistanten Zeitpunkten erfolgt und die Berechnung der geflossenen Ladungsmenge durch Multiplikation des gemessenen Stromwertes mit der Zeitspanne zwischen zwei Messpunkten erfolgt.

4. Verfahren nach einem der Ansprüche 1 bis 3, **dadurch gekennzeichnet, dass** zu Beginn eines Spendeintervalls die Umgebungstemperatur gemessen und die vorgegebene kumulierte Ladungsmenge in Abhängigkeit von dieser Temperatur bestimmt wird.

5. Verfahren nach einem der Ansprüche 1 bis 4, **dadurch gekennzeichnet, dass** die vorgegebene kumulierte Ladungsmenge aus einer Tabelle bestimmt wird, welche in einem Speicher der Steuereinheit (1) abgelegt ist.

6. Verfahren nach Anspruch 5, **dadurch gekennzeichnet, dass** die Tabelle mehrdimensional gestaltet ist und Werte zumindest in Abhängigkeit von der Umgebungstemperatur, dem anfänglichen Schmierstoffvorrat der unbenutzten Kartusche (2) und der vorgesehenen Betriebsdauer zur vollständigen Entleerung des Schmierstoffspenders enthält.

7. Verfahren nach einem der Ansprüche 1 bis 6, **dadurch gekennzeichnet, dass** durch Benutzereingabe die Betriebsdauer zur vollständigen Entleerung der Kartusche (2) festgelegt wird und dass aus einer Tabelle für eine eingestellte Betriebsdauer der zeitliche Abstand zwischen zwei aufeinanderfolgenden Spenden, das Spendeintervall, abgerufen wird.

8. Verfahren nach Anspruch 7, **dadurch gekennzeichnet, dass** bei der Verwendung von Kartuschen mit unterschiedlichem anfänglichen Schmierstoffvorrat jeweils der gleiche Bruchteil des Schmierstoffvorrats pro Spende abgegeben wird, so dass die Länge des Spendeintervalls für eine Betriebsdauer zur vollständigen Entleerung gleich groß ist.

## Claims

1. A method for the dosed output of a lubricant (3) by means of a lubricant dispenser, which has: a lubricant cartridge (2) filled with lubricant (3); at least one electrochemical gas-generating cell (4); and a control electronic system (1) for actuating the gas-generating cell (4), said system having a microcontroller (8) and a switch (9) for interrupting the current flowing through the gas-generating cell (4),
the current circuit through the gas-generating cell (4) being closed by the control electronic system (1) and lubricant (3) being displaced out of the cartridge (2) by the released gas at time intervals that can be set,
the electrical current that flows through the gas-generating cell (4) being measured during gas generation,
**characterised in that**
the charge that has flowed through the gas-generating cell (4) is summed, and the current circuit is interrupted if the summed charge has exceeded a predefined cumulative amount of charge.

2. The method according to Claim 1,
**characterised in that**
the method is performed multiple times at successive time intervals and that the amount of charge by which the cumulative charge has exceeded the intended charge value is stored on shutdown, and the summation of the cumulative charge is started at this value for the subsequent iteration.

3. The method according to Claim 1 or 2,
**characterised in that**
the measurement of the current takes place discontinuously at equidistant points in time, and the amount of charge that has flowed is calculated by multiplying the measured current value by the time span between two measurement points.

4. The method according to any one of Claims 1 to 3,
**characterised in that**
at the start of a dispensing interval, the ambient temperature is measured and the predefined cumulative amount of charge is determined as a function of this temperature.

5. The method according to any one of Claims 1 to 4,
**characterised in that**
the predefined cumulative amount of charge is determined from a table that is stored in a memory of the control unit (1).

6. The method according to Claim 5,
**characterised in that**
the table is multi-dimensional and contains values at least as a function of the ambient temperature, the initial lubricant reserves of the unused cartridge (2) and the intended operating duration for complete emptying of the lubricant dispenser.

7. The method according to any one of Claims 1 to 6,
**characterised in that**
the operating duration for complete emptying of the cartridge (2) is defined by user input and that the time interval between two successive dispensing operations, the dispensing interval, for a set operating duration is retrieved from a table.

8. The method according to Claim 7,
**characterised in that**
if cartridges having different initial lubricant reserves are used, the same fraction of the lubricant reserves is output for each dispensing operation, so that the length of the dispensing interval is the same for an operating duration until complete emptying.

## Revendications

1. Procédé pour la distribution dosée d'un lubrifiant (3) à l'aide d'un distributeur de lubrifiant présentant une cartouche de lubrifiant (2) remplie de lubrifiant (3), au moins une cellule de générateur de gaz électrochimique (4) et une électronique de commande (1) permettant de commander la cellule de générateur de gaz (4) avec un microcontrôleur (8) et un interrupteur (9) destiné à couper le courant traversant la cellule de générateur de gaz (4),
dans lequel, à des intervalles de temps réglables, le circuit électrique traversant la cellule de générateur de gaz (4) est fermé par l'électronique de commande (1) et le lubrifiant (3) est refoulé hors de la cartouche (2) par le gaz libéré,
dans lequel le courant électrique traversant la cellule de générateur de gaz (4) est mesuré pendant la génération de gaz, **caractérisé en ce que** la charge écoulée à travers la cellule de générateur de gaz (4) est additionnée, et
**en ce que** le circuit électrique est coupé lorsque la charge additionnée dépasse une quantité de charge cumulée prédéfinie.

2. Procédé selon la revendication 1, **caractérisé en ce que** le procédé est mis en oeuvre plusieurs fois à des intervalles de temps successifs, et **en ce que** lors de la coupure, la quantité de charge selon laquelle la charge cumulée a dépassé la valeur de charge requise est enregistrée, et la sommation de la charge cumulée commence à cette valeur lors de la mise en oeuvre suivante.

3. Procédé selon la revendication 1 ou 2, **caractérisé en ce que** la mesure du courant est effectuée de façon discontinue à des moments équidistants, et le calcul de la quantité de charge écoulée est réalisé en multipliant la valeur de courant mesurée par le laps de temps entre deux points de mesure.

4. Procédé selon l'une des revendications 1 à 3, **caractérisé en ce qu'**au début d'un intervalle de distribution, la température ambiante est mesurée et la quantité de charge cumulée prédéfinie est déterminée en fonction de cette température.

5. Procédé selon l'une des revendications 1 à 4, **caractérisé en ce que** la quantité de charge cumulée prédéfinie est déterminée à partir d'un tableau enregistré dans une mémoire de l'unité de commande (1).

6. Procédé selon la revendication 5, **caractérisé en ce que** le tableau est conçu de façon pluridimensionnelle et contient des valeurs au moins en fonction de la température ambiante, de la réserve de lubrifiant initiale dans la cartouche (2) neuve et de la durée de fonctionnement prévue jusqu'au vidage complet du distributeur de lubrifiant.

7. Procédé selon l'une des revendications 1 à 6, **caractérisé en ce qu'**une entrée d'utilisateur permet de définir la durée de fonctionnement jusqu'au vidage complet de la cartouche (2), et **en ce que** l'intervalle de temps entre deux distributions consécutives, l'intervalle de distribution, est récupéré à partir d'un tableau pour une durée de fonctionnement réglée.

8. Procédé selon la revendication 7, **caractérisé en ce que** lors de l'utilisation de cartouches contenant une réserve de lubrifiant initiale différente, la même fraction de la réserve de lubrifiant est délivrée à chaque distribution, de sorte que la durée de l'intervalle de distribution pour une durée de fonctionnement jusqu'au vidage complet est identique.
